# EUROPEAN PATENT APPLICATION

(11) **EP 1 939 994 A2**
(43) Date of publication of application: **02.07.2008**
(21) Application number: 07123628.5
(22) Date of filing: 19.12.2007
(51) Int. Cl.: H02G 1/00

(54) **Sealing member fitting apparatus and method**

(30) Priority: 28.12.2006 JP 2006355072
(71) Applicant: Tyco Electronics AMP K.K., Kawasaki-shi, Kanagawa 213-8535 (JP)
(72) Inventor: Ikeda, Yuji, Kawasaki-shi Aichi 213-8535 (JP); Imai, Kouji, Kawasaki-shi Kanagawa 213-8535 (JP); Abe, Minoru, Kawasaki-shi Kanagawa 213-8535 (JP); Funakawa, Jun, Kariya-shi Aichi 448-8650 (JP); Nakajima, Koichi, Kariya-shi Aichi 448-8650 (JP); Toma, Daisuke, Kariya-shi Aichi 448-8650 (JP); Miyazaki, Hirohide, Kariya-shi Aichi 448-8650 (JP)
(74) Representative: Johnstone, Douglas Ian

(57) **Abstract**

A sealing member fitting apparatus (1) has a sealing member holding device (30) which holds hollow sealing members (S). The sealing members (S) are transferred from the sealing member holding device (30) to a sealing member transfer device (10) in a sealing member receiving position facing the sealing member holding device (30). The sealing member transfer device (10) is then switched from the sealing member receiving position to a sealing member fitting position facing an electrical wire clamping device (60) which clamps electrical wires (W). Parts of the electrical wires (W) which lead out from the electrical wire clamping device (60) are held in a slidable manner in an electrical wire insertion guide device (70). The electrical wire insertion guide device (70) is moved to its sealing member fitting position to hold covering end parts of the electrical wires (W) and to position the central axis of the covering end parts so that they are substantially coaxial with the central axes of the sealing members (S). The sealing members (S) are then fitted on the covering end parts of the electrical wires (W).

## Description

The present invention relates to a sealing member fitting apparatus and method which automatically fits a hollow sealing member on one end portion of an electrical wire.

A prior art sealing member fitting apparatus which automatically fits a hollow sealing member on one end portion of an electrical wire is disclosed in JP2004-42234A. The apparatus, a front view of which is shown in FIG. 30, is a rubber plug fitting apparatus.

The rubber plug fitting apparatus 100 comprises a rubber plug transfer mechanism 110 and an electrical wire insertion device 120.

The rubber plug transfer mechanism 110 comprises a rubber plug holding part 111 which holds a rubber plug S that is fed through a tube by compressed air or the like, and a middle pin 113 for transferring the rubber plug S held in the rubber plug holding part 111 to a fitting pin 112 which is arranged to transport the transferred rubber plug S.

In the rubber plug transfer mechanism 110, the rubber plug S held in the rubber plug holding part 111 is held by the middle pin 113 being passed through the rubber plug S, and the rubber plug S is fitted over and transferred to the fitting pin 112 in a transfer position A. The rubber plug S is then transported to a fitting position B by a rotary pin holder 114 rotating the fitting pin 112 through 180°.

The electrical wire insertion device 120 comprises a rubber plug holder 121, an electrical wire guide 122, an anti-buckling guide 123, and an electrical wire clamp 124.

The rubber plug holder 121 is used to hold the rubber plug S that is transported to the fitting position B by the fitting pin 112 and to fit this rubber plug on an electrical wire W. The rubber plug holder 121 comprises a chuck cylinder 126 and a pair of gripping arms 127 (left and right gripping arms) to be opened and closed by the chuck cylinder 126.

Semicircular grooves 128 that have the same shape as the rubber plug S are respectively formed at the tip end portions of the individual gripping arms 127. When the two gripping arms 127 are closed, the semicircular grooves 128 form a circular hole that accommodates and holds the rubber plug S that is fitted over the fitting pin 112.

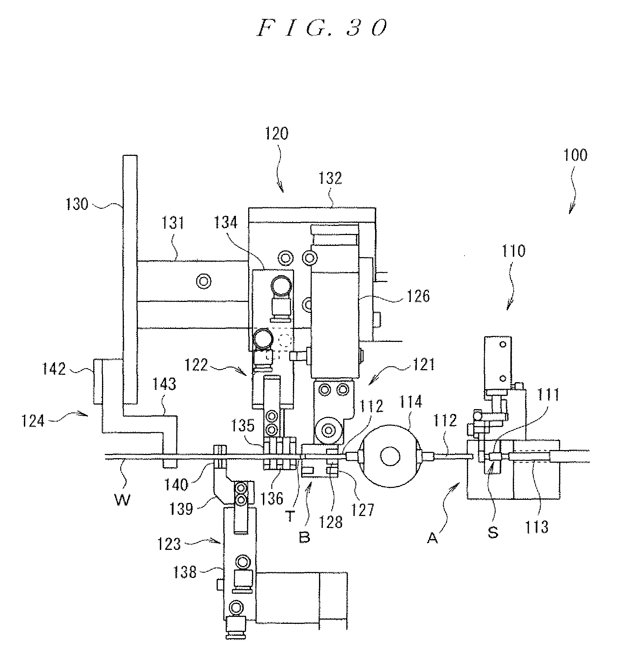

The chuck cylinder 126 is fastened to a movable base stand 132 that can move in the horizontal direction (left-right direction in FIG. 30) along a guide rail 131 fastened to a base stand 130.

The electrical wire guide 122 is installed facing the gripping arms 127 of the rubber plug holder 121, and is used to position and hold the tip end part T of the electrical wire W by causing this tip end part T to coincide with the axial core of the fitting pin 112. The electrical wire guide 122 comprises a chuck cylinder 134 and a pair of gripping arms 135 (left and right gripping arms) to be opened and closed by the chuck cylinder 134.

Semicircular grooves 136 having a radius which is such that the total of the respective radii is slightly larger than the external diameter of the electrical wire W are respectively formed at the tip end portions of the individual gripping arms 135. Moreover, when the two gripping arms 135 are closed, the semicircular grooves 136 of the two gripping arms 135 form a circular hole that holds the tip end part T of the electrical wire W by allowing this tip end part T to be fitted with play inside the hole. The chuck cylinder 134 is fastened to the movable base stand 132.

The anti-buckling guide 123 is used to hold the electrical wire W between the electrical wire guide 122 and the electrical wire clamp 124 that is installed away from the electrical wire guide 122 and to prevent the electrical wire W from drooping and buckling. The anti-buckling guide 123 comprises a chuck cylinder 138 and a pair of gripping arms 139 (left and right gripping arms) to be opened and closed by the chuck cylinder 138.

Semicircular grooves 140 having a radius which is such that the total of the respective radii is slightly larger than the external diameter of the electrical wire W are respectively formed at the tip end portions of the individual gripping arms 139. In addition, when the two gripping arms 139 are closed, the semicircular grooves 140 of the two gripping arms 139 form a circular hole that holds the electrical wire W by allowing this electrical wire to be fitted with play inside the hole.

The chuck cylinder 138 is fastened to the base stand 130, so that there is no movement of this cylinder in the horizontal direction.

The electrical wire clamp 124 comprises a pair of gripping arms 143 (left and right gripping arms) pivoted about a supporting shaft 142 that is fastened to the base stand 130.

Semicircular grooves (not shown in the figure) having a radius which is such that the total of the respective radii is the same as the external diameter of the electrical wire W are respectively formed at the tip end portions of the individual gripping arms 143 in a manner facing each other. Furthermore, when the two gripping arms 143 are closed, the semicircular grooves of the two gripping arms 143 form a circular hole that grips the electrical wire W. The two gripping arms 143 are opened and closed by an air cylinder (not shown in the figure) that is fastened to the base stand 130.

When a rubber plug S is to be fitted on an electrical wire W by the rubber plug fitting apparatus 100, the rubber plug S that is fitted over the fitting pin 112 and transported to the fitting position B is first held by the rubber plug holder 121.

Furthermore, the electrical wire W is held by the electrical wire guide 122, anti-buckling guide 123, and electrical wire clamp 124, and the electrical wire W and the fitting pin 112 are disposed in a straight line. Here, an electrical wire insertion hole (not shown in the figure) that allows the insertion of the tip end part T of the electrical wire W is formed at the tip end portion of the fitting pin 112, and the electrical wire W and fitting pin 112 are disposed such that this electrical wire insertion hole and the tip end part T of the electrical wire W face each other.

The movable base stand 132 is then moved toward the base stand 130 so that the rubber plug holder 121 is caused to move, together with the fitting pin 112, in the direction approaching the electrical wire W, thus inserting the tip end part T of the electrical wire W into the electrical wire insertion hole in the fitting pin 112 to a specified length.

Moreover, only the fitting pin 112 is caused to move in the direction away from the electrical wire W without moving the rubber plug holder 121. If this is done, because the rubber plug S is held by the rubber plug holder 121, the fitting pin 112 is removed from the rubber plug S, so that the rubber plug S is fitted on the electrical wire W at a specified location.

Thus, with respect to the rubber plug fitting apparatus 100 shown in FIG. 30, by using a construction in which the rubber plug S is fitted over the fitting pin 112 having an electrical wire insertion hole formed therein, and the tip end part T of the electrical wire W being then inserted into the electrical wire insertion hole in the fitting pin 112, the insertion resistance during the insertion of the electrical wire W into the rubber plug S can be reduced so that the buckling of the electrical wire W can be prevented.

However, in the rubber plug fitting apparatus 100 shown in FIG. 30, when the electrical wire W is to be held by the electrical wire guide 122 and anti-buckling guide 123, it is necessary to manually perform the setting of the electrical wire W on the semicircular grooves 136 of the gripping arms 135 of the electrical wire guide 122 and the setting of the electrical wire W on the semicircular grooves 140 of the gripping arms 139 of the anti-buckling guide 123. Accordingly, the rubber plug fitting apparatus 100 has a problem in that it is difficult to increase the operation efficiency.

The present invention was devised to solve the problem of the prior art described above. It is an object of the present invention to provide a sealing member fitting apparatus and method which can automatically perform the setting of an electrical wire in an electrical wire covering end part guide device that performs the positioning of the central axis of the covering end part of the electrical wire with the central axis of a sealing member.

The sealing member fitting apparatus of claim 1 provides a sealing member fitting apparatus comprising:
a sealing member holding device for holding a hollow sealing member;
an electrical wire clamping device for clamping an electrical wire;
a sealing member transfer device for switching between a sealing member receiving position that faces the sealing member holding device and a sealing member fitting position that faces the electrical wire clamping device so that said sealing member transfer device in the sealing member receiving position is arranged to receive and hold the sealing member that is held by the sealing member holding device, and said sealing member transfer device in the sealing member fitting position is arranged to fit said sealing member on a covering end part of the electrical wire when the electrical wire is clamped by the electrical wire clamping device; and
an electrical wire insertion guide device for holding in a slidable manner said electrical wire when the electrical wire is clamped by the electrical wire clamping device, and which is arranged to position the central axis of the covering end part of said electrical wire substantially coaxially with the central axis of the sealing member when the sealing member is held by the sealing member transfer device located in the sealing member fitting position, wherein
the electrical wire insertion guide device is arranged to hold a part of the electrical wire which leads out from the electrical wire clamping device, and is arranged to move to its sealing member fitting position to hold the covering end part of the electrical wire.

Furthermore, the sealing member fitting apparatus of claim 2 is the sealing member fitting apparatus according to claim 1, wherein the electrical wire insertion guide device has an electrical wire covering end part holding unit for holding the covering end part of the electrical wire when the electrical wire is clamped by the electrical wire clamping device, and an electrical wire intermediate part holding unit for holding the electrical wire between its lead-out part and its covering end part when the electrical wire is clamped by the electrical wire clamping device.

In the sealing member fitting apparatus of claim 1, the electrical wire insertion guide device has a construction in which the holding of the electrical wire that is clamped by the electrical wire clamping device is performed at the lead-out part of this electrical wire that is led out from the electrical wire clamping device.

Thus, by holding individual electrical wires at the lead-out parts of these electrical wires from the clamping device where the pitch is established, it is possible to securely perform the holding of the respective electrical wires by means of the electrical wire insertion guide device. Accordingly, the setting of the electrical wires in the electrical wire insertion guide device can be performed automatically. This is particularly effective when electrical wires having a small external diameter are set in the electrical wire insertion guide device.

Moreover, in the sealing member fitting apparatus of claim 2, the sealing member fitting apparatus according to claim 1 is constructed such that the electrical wire insertion guide device has an electrical wire covering end part holding unit which holds the covering end part of the electrical wire clamped by the electrical wire clamping device, and an electrical wire intermediate part holding unit which holds the electrical wire clamped by the electrical wire clamping device between the lead-out part and the covering end part.

Accordingly, when a sealing member is fitted on an electrical wire, the electrical wire intermediate part holding unit holds the area between the lead-out part and the covering end part of the electrical wire that is clamped by the electrical wire clamping device, so that buckling of the electrical wire can be prevented. This is particularly effective when an electrical wire having a small external diameter is set in the electrical wire insertion guide device.

The method of fitting a sealing member as claimed in claim 3, provides a method of fitting a sealing member comprising the steps of:
holding a hollow sealing member with a sealing member holding device;
clamping an electrical wire with an electrical wire clamping device;
transferring the sealing member from the sealing member holding device to a sealing member transfer device in a sealing member receiving position facing the sealing member holding device;
switching said sealing member transfer device from the sealing member receiving position to a sealing member fitting position facing the electrical wire clamping device;
holding in a slidable manner in an electrical wire insertion guide device a part of the electrical wire which leads out from the electrical wire clamping device;
moving the electrical wire insertion guide device to its sealing member fitting position to hold a covering end part of the electrical wire and to position the central axis of the covering end part so as to be substantially coaxial with the central axis of the sealing member; and
fitting the sealing member on the covering end part of the electrical wire.

Furthermore, the method of claim 4 is the method according to claim 3, providing the electrical wire insertion guide device with an electrical wire covering end part holding unit which holds the covering end part of the electrical wire when the electrical wire is clamped by the electrical wire clamping device, and an electrical wire intermediate part holding unit which holds the electrical wire between its lead-out part and its covering end part when the electrical wire is clamped by the electrical wire clamping device;
forming an integral unit from the electrical wire covering end part holding unit and the electrical wire intermediate part holding unit and holding the lead-out part of the electrical wire;
moving the electrical wire covering end part holding unit to its sealing member fitting position to hold the covering end part of the electrical wire; and
moving the electrical wire intermediate part holding unit to the area between the electrical wire clamping device and the sealing member fitting position to hold the electrical wire between the lead-out part and the covering end part.

An embodiment of the invention will now be described, by way of example only, with reference to the accompanying drawings, in which:
FIG. 1 is a schematic perspective view of the sealing member fitting apparatus of the present invention;
FIG. 2 is a front view of an electrical wire insertion guide device of the apparatus and the device is in an initial state;
FIG. 3 is a side view of the electrical wire insertion guide device shown in FIG. 2;
FIG. 4 is a plan view of the electrical wire insertion guide device shown in FIG. 2;
FIG. 5 is a side view of the electrical wire insertion guide device at the time of the fitting of the sealing members;
FIG. 6 is a plan view of the electrical wire insertion guide device shown in FIG. 5;
FIG. 7 is a front view showing the initial state of the electrical wire insertion guide device that is located in an electrical wire holding position;
FIG. 8 is a plan view of the electrical wire insertion guide device shown in FIG. 7;
FIGS. 9A and 9B show the initial state of a sealing member transfer device of the apparatus and the device is located in the sealing member receiving position, with FIG. 9A being a schematic diagram of the sealing member fitting apparatus that is in this initial state, and FIG. 9B being a sectional view of essential parts;
FIGS. 10A and 10B show a state in which a first member of the sealing member transfer device has advanced from the initial state shown in FIGS. 9A and 9B, with FIG. 10A being a schematic diagram of the sealing member fitting apparatus in this state, and FIG. 10B being a sectional view of essential parts;
FIGS. 11A and 11B show a state in which a seal pressing member of the apparatus has advanced from the state shown in FIGS. 10A and 10B, with FIG. 11A being a schematic diagram of the sealing member fitting apparatus in this state, and FIG. 11B being a sectional view of essential parts;
FIGS. 12A and 12B show a state in which guide members and cylindrical bodies of the sealing member transfer device have advanced from the state shown in FIGS. 11A and 11B, with FIG. 12A being a schematic diagram of the sealing member fitting apparatus in this state, and FIG. 12B being a sectional view of essential parts;
FIGS. 13A and 13B show a state in which the first member has retracted from the state shown in FIGS. 12A and 12B, with FIG. 13A being a schematic diagram of the sealing member fitting apparatus in this state, and FIG. 13B being a sectional view of essential parts;
FIGS. 14A and 14B show the initial state of the sealing member transfer device that is located in the sealing member fitting position, with FIG. 14A being a schematic diagram of the sealing member fitting apparatus in this state, and FIG. 14B being a sectional view of essential parts;
FIG. 15 is a side view showing the sealing member fitting apparatus in which the electrical wire insertion guide device is in the initial state and located in the electrical wire holding position;
FIG. 16 is a side view showing the sealing member fitting apparatus that is in a state in which an electrical wire covering end part holding unit and an electrical wire intermediate part holding unit of the electrical wire insertion guide device are closed from the initial state shown in FIG. 15;
FIG. 17 is a front view showing the sealing member fitting apparatus that is in the state shown in FIG. 16;
FIG. 18 is a side view showing the sealing member fitting apparatus that is in a state in which the electrical wire covering end part holding unit and electrical wire intermediate part holding unit have retracted from the state shown in FIG. 17;
FIG. 19 is a side view showing the sealing member fitting apparatus that is in a state in which the electrical wire covering end part holding unit has retracted from the state shown in FIG. 18, and the electrical wire insertion guide device is therefore located in the sealing member fitting position;
FIG. 20 is a side view showing the sealing member fitting apparatus that is in a state in which the sealing member transfer device of the apparatus has advanced from the state shown in FIG. 19;
FIG. 21 is a sectional view of essential parts in the state shown in FIG. 20;
FIG. 22 is a side view showing the sealing member fitting apparatus that is in a state in which the sealing member transfer device has advanced from the state shown in FIG. 20;
FIG. 23 is a side view showing the sealing member fitting apparatus that is in a state in which the sealing member transfer device has advanced further from the state shown in FIG. 22;
FIG. 24 is a sectional view of essential parts in the state shown in FIG. 23;
FIG. 25 is a side view showing the sealing member fitting apparatus that is in a state in which the cylindrical bodies of the sealing member transfer device have retracted from the state shown in FIG. 23;
FIG. 26 is a sectional view of essential parts in the state shown in FIG. 25;
FIG. 27 is a side view showing the sealing member fitting apparatus that is in a state in which the electrical wire covering end part holding unit and electrical wire intermediate part holding unit are opened from the state shown in FIG. 25;
FIG. 28 is a side view showing the sealing member fitting apparatus that is in a state in which the first member of the sealing member transfer device has retracted from the state shown in FIG. 27;
FIG. 29 is a sectional view of essential parts in the state shown in FIG. 28; and
FIG. 30 is a front view of a rubber plug fitting apparatus according to JP2004-42234A.

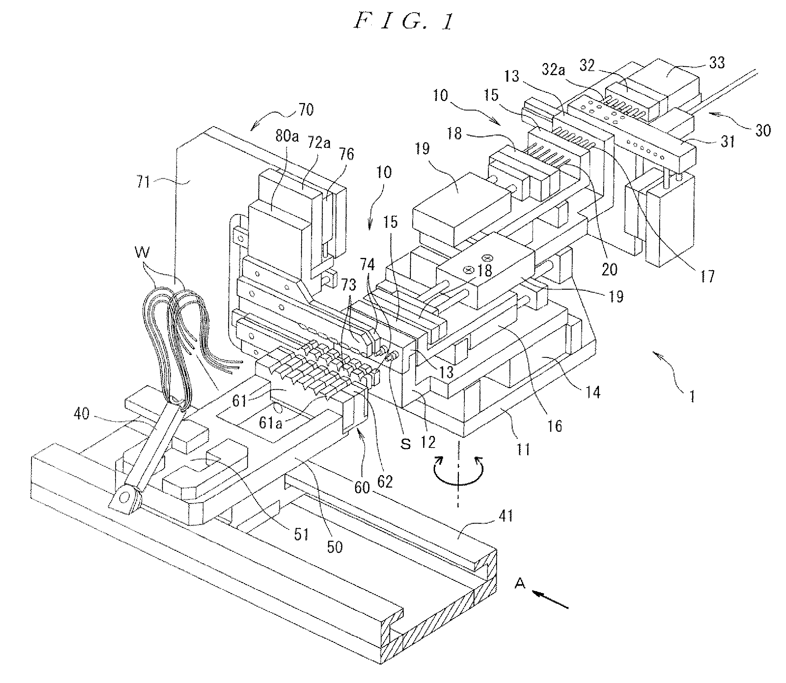

Next, an embodiment of the present invention will be described with reference to the figures. In the following description, the side away from the viewer in FIG. 1 is defined as the rear side, and the side toward the viewer is defined as the front side. However, in the description of a sealing member transfer device of a sealing member fitting apparatus, the side on which a first member approaches an electrical wire insertion guide device or sealing member holding device is defined as the front side, and the side opposite of that is defined as the rear side.

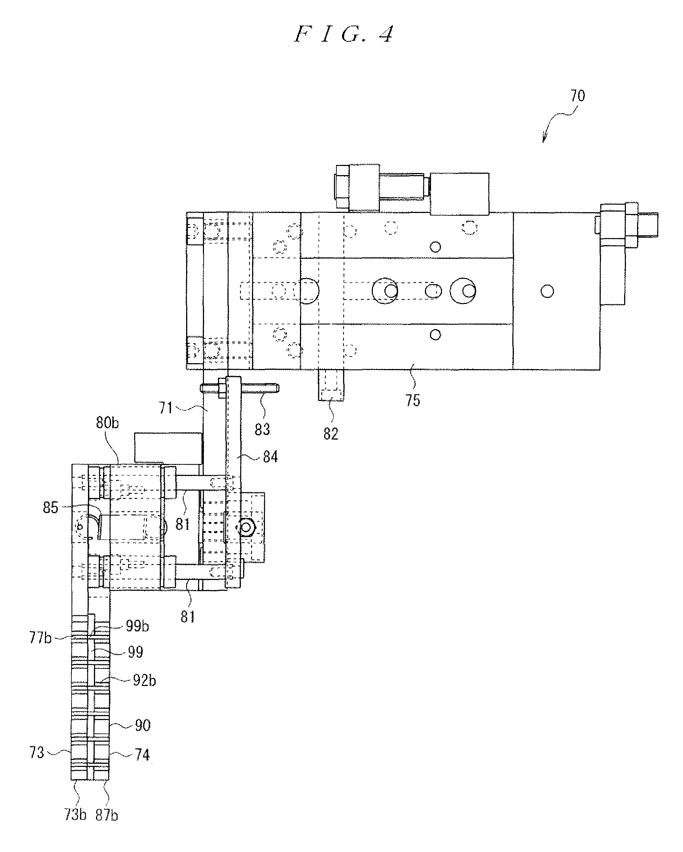

In FIGS. 4, 6, and 8, for the convenience of description, illustration of an intermediate part upper holding piece and covering end part upper holding piece is omitted.

The sealing member fitting apparatus 1 shown in FIG. 1 is used in an automated terminal treatment apparatus that is employed for the same purpose as the automated electrical wire terminal treatment apparatus shown in FIG. 30, and comprises a sealing member transfer device 10, a sealing member holding device 30, an electrical wire supporting member 40, an electrical wire supporting member setting jig 50, an electrical wire clamping device 60, and an electrical wire insertion guide device 70.

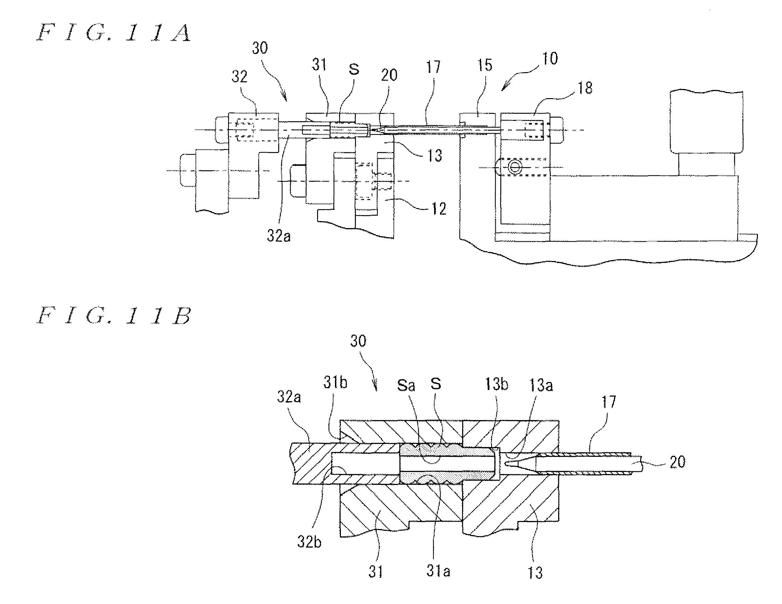

Here, the sealing member holding device 30 is disposed to the rear side of the sealing member transfer device 10, and comprises a sealing member holding part 31 which holds a plurality of sealing members S that are sent from a sealing member supply source (not shown in the figures), and a seal pressing member 32 which presses the plurality of held sealing members S forward from the rear during the transfer of the sealing members S (see FIG. 11B).

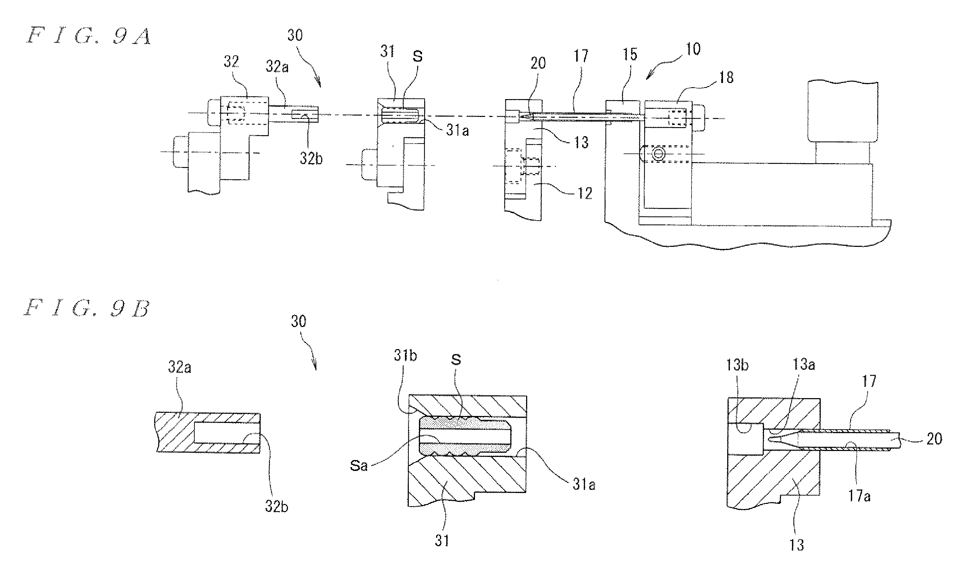

A plurality of through-holes 31a (see FIGS. 9A and 9B) that pass through in the forward-rearward direction and that can respectively hold the plurality of sealing members S are formed in the sealing member holding part 31. A tapered surface 31b for facilitating the insertion of a sealing member S is formed at the rear end edge of each of the through-holes 31a.

Furthermore, a plurality of pressing parts 32a (see FIGS. 9A and 9B) that respectively press the plurality of sealing members S are provided on the seal pressing member 32. A receiving hole 32b that can receive a cylindrical body 17 and a guide member 20 is formed in each of the pressing parts 32a from the front toward the rear. The seal pressing member 32 is made movable in the forward-rearward direction by a pressing member cylinder 33.

Moreover, with regard to the electrical wire supporting member 40, one end portion thereof is supported in a pivotable manner on an electrical wire transport conveyer 41 that is installed to the front side of the sealing member transfer device 10, and the other end portion is designed to support a plurality of electrical wires W. The electrical wire transport conveyer 41 is designed to move in the left-right direction indicated by arrow A in FIG. 1 and to successively transport the electrical wires W.

In addition, the electrical wire supporting member setting jig 50 is installed on the electrical wire transport conveyer 41, and is provided, on the upper surface thereof, with a supporting part 51 that supports the electrical wire supporting member 40 in an initial state with the sealing member transfer device 10 being located in a sealing member fitting position.

Furthermore, the electrical wire clamping device 60 is installed on the rear end portion of the electrical wire supporting member setting jig 50. The electrical wire clamping device 60 comprises a clamping part 62 that clamps a plurality of electrical wires W in the vicinity of the covering end parts thereof at a specified pitch. An electrical wire introduction part 61 is provided to the front side of the clamping part 62 and has a plurality of electrical wire introduction grooves 61 a.

Moreover, with regard to the sealing member transfer device 10, a pair of these devices may be installed on a base plate part 11 that is supported in a manner capable of pivoting in the arrow directions in FIG. 1, and are designed such that each of these sealing member transfer devices 10 can switch between a sealing member receiving position which faces the sealing member holding device 30 and the sealing member fitting position which faces the electrical wire clamping device 60. The base plate part 11 pivots such that when one of the sealing member transfer devices 10 is located in the sealing member receiving position facing the sealing member holding device 30, the other sealing member transfer device 10 is always located in the sealing member fitting position facing the electrical wire clamping device 60.

Each sealing member transfer device 10 comprises a first member 13 that can advance and retract, a plurality of cylindrical bodies 17 that advance and retract by being installed inside the first member 13 and that protrude from the first member 13 in the advanced position but are accommodated inside the first member 13 in the retracted position, and a plurality of guide members 20 that advance and retract by being respectively disposed inside the cylindrical bodies 17 and that protrude from the cylindrical bodies 17 in the advanced position but are accommodated in the cylindrical bodies 17 in the retracted position.

Furthermore, the first member 13 has a plurality of through-holes 13a (see FIGS. 9A and 9B) that pass through in the forward-rearward direction and that can respectively receive the plurality of cylindrical bodies 17. Sealing member receiving recessed parts 13b are formed at the front ends of the respective through-holes 13a and can respectively receive sealing members S. The first member 13 is attached to a first member supporting plate 12, and the first member supporting plate 12 is made movable in the forward-rearward direction by a first member cylinder 14.

Moreover, each of the cylindrical bodies 17 is a cylindrical body having a through-hole 17a (see FIGS. 9A and 9B) that passes through in the forward-rearward direction and can receive a guide member 20. The rear end portions of these cylindrical bodies 17 are fastened to a cylindrical body supporting member 15. The respective cylindrical bodies 17 are passed through the through-holes 13a in the first member 13.

The cylindrical body supporting member 15 is made movable in the forward-rearward direction by a cylindrical body cylinder 16.

In addition, each of the guide members 20 is constructed from a rod-form body whose front end is formed as a tapered circular conic-shaped guide part, and the rear end portion is fastened to a guide member supporting member 18. The respective guide members 20 are passed through the through-holes 17a in the respective cylindrical bodies 17. The guide member supporting member 18 is made movable in the forward-rearward direction by a guide member cylinder 19.

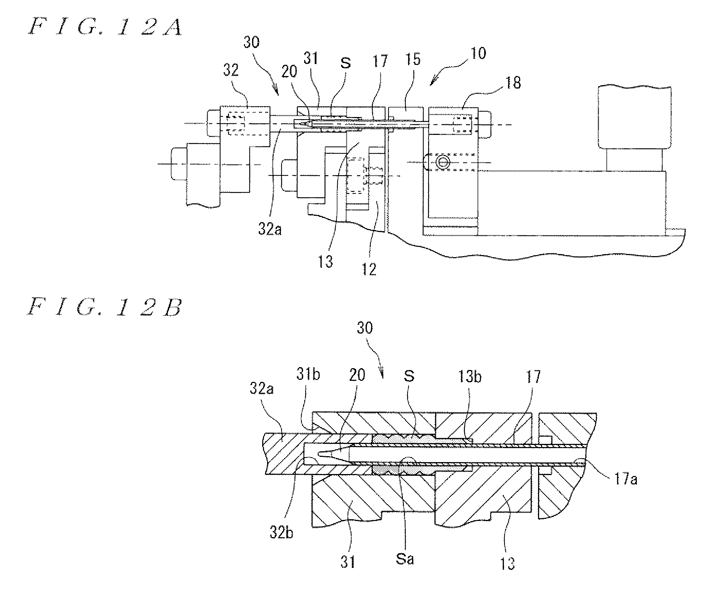

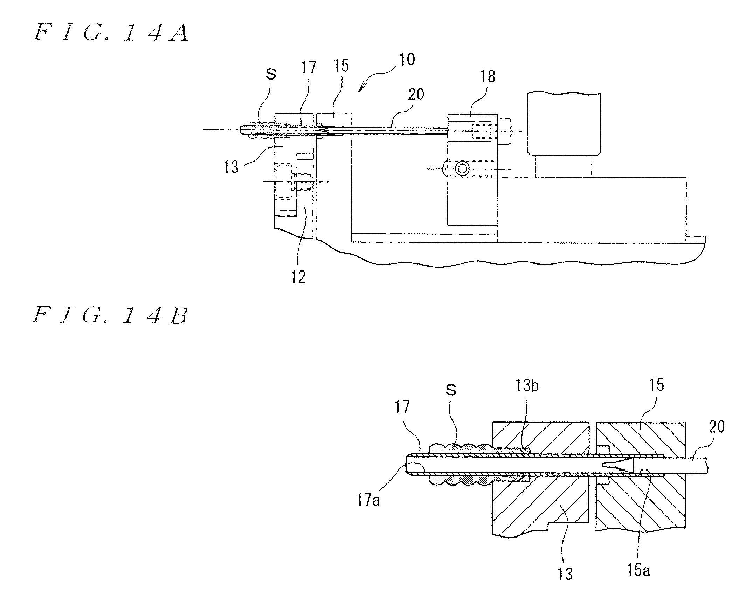

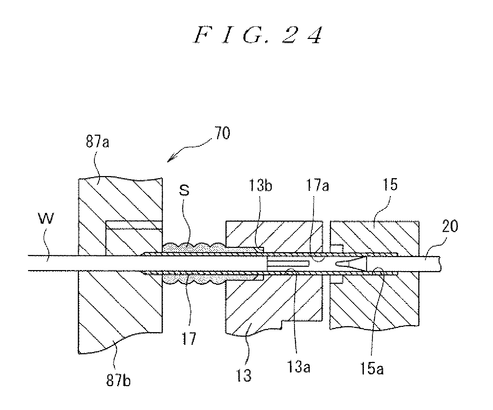

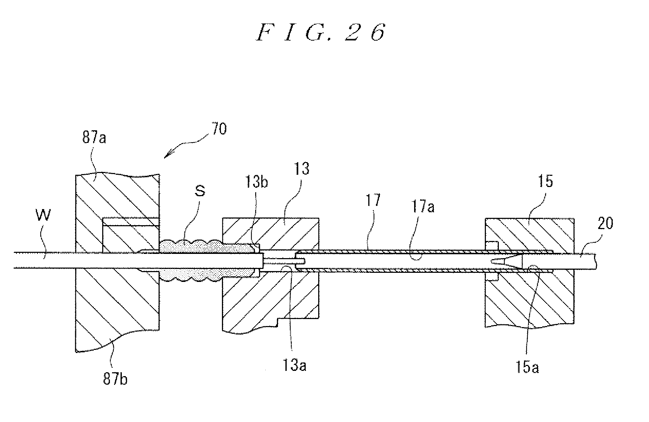

With reference to the sealing member transfer device 10 when it is in the sealing member receiving position, and when the first member 13, cylindrical bodies 17, and guide members 20 are in the advanced positions (see FIG. 12B), the guide members 20 and cylindrical bodies 17 enter the hollow parts Sa of the sealing members S that are held in the sealing member holding part 31, and receive and hold the sealing members on the outer circumferential surfaces of the cylindrical bodies 17. Then, while the position of this sealing member transfer device 10 is subsequently switched to the sealing member fitting position, the first member 13 and guide members 20 retract (see FIG. 14B), and in this sealing member fitting position, the first member 13 advances again accompanied by the sealing members S, thus receiving the covering end parts of positioned electrical wires W inside the cylindrical bodies 17 (see FIG. 24). Afterward, the sealing members S on the cylindrical bodies 17 are transferred onto the covering end parts of the electrical wires W by causing only the cylindrical bodies 17 to retract into the first member 13 (see FIG. 26).

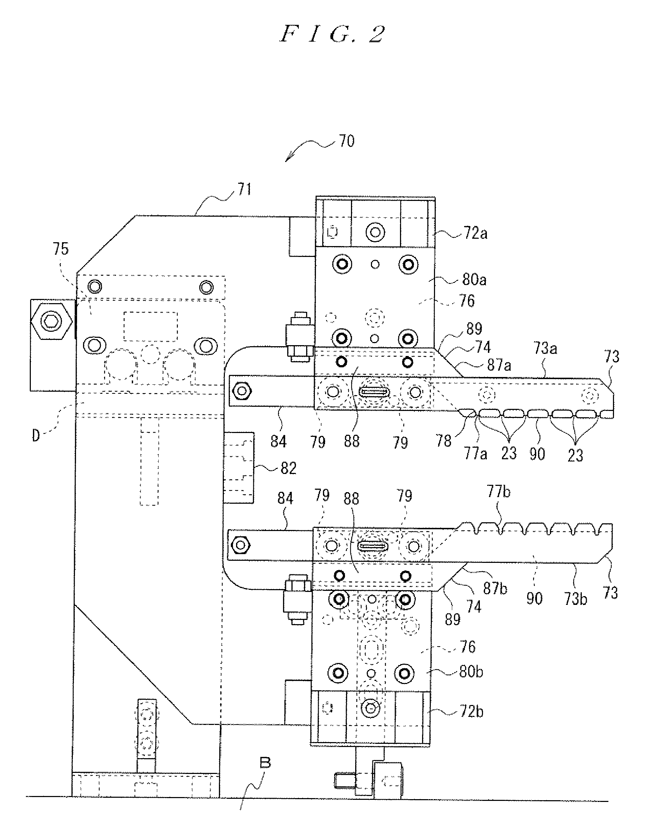

The electrical wire insertion guide device 70 is installed to the rear side of the electrical wire clamping device 60, and comprises an advancing and retracting base part 71 that can move in the forward-rearward direction, a pair of ascending and descending base parts 72a and 72b attached to the advancing and retracting base part 71 in a manner capable of moving up and down, an electrical wire intermediate part holding unit 73 attached to the ascending and descending base parts 72a and 72b, and an electrical wire covering end part holding unit 74 similarly attached to the ascending and descending base parts 72a and 72b as shown in FIGS. 2 to 6.

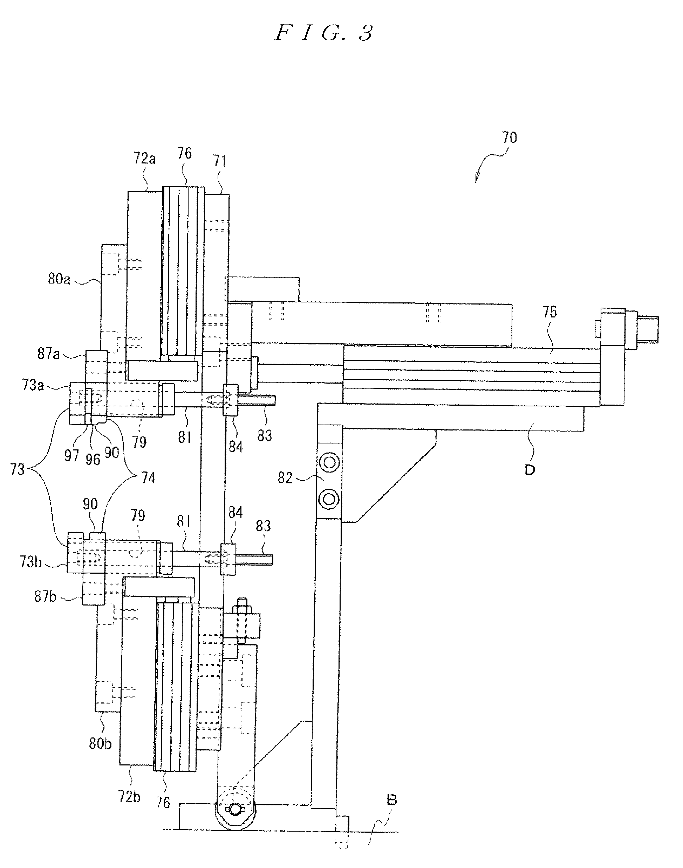

As is shown in FIGS. 2 to 7, the advancing and retracting base part 71 is formed substantially in the shape of the letter "C" as viewed from the forward-rearward direction, and is installed with the open side thereof facing toward the electrical wires W that are clamped by the electrical wire clamping device 60. Furthermore, as is shown in FIG. 3, the advancing and retracting base part 71 is installed so as to be movable in the forward-rearward direction with respect to a base B by means of an advancing and retracting cylinder 75 which is fastened to a base stand D that is installed in an upright attitude on the base B. Moreover, a push-in piece 82 for pushing in two pushing pins 83 (described later) is installed on the side surface of the base stand D.

The respective ascending and descending base parts 72a and 72b are installed so as to be movable in the vertical direction with respect to the advancing and retracting base part 71 by means of ascending and descending cylinders 76 that are respectively fastened to the end portions of the advancing and retracting base part 71 formed substantially in the shape of the letter "C." In addition, electrical wire holding unit attachment plates 80a and 80b, each having advancing and retracting rod insertion holes 79 that extend in the forward-rearward direction formed in two locations thereof, are respectively fastened to the ascending and descending base parts 72a and 72b.

As is shown in FIG. 2, the electrical wire intermediate part holding unit 73 comprises an intermediate part upper holding piece 73a and an intermediate part lower holding piece 73b. Furthermore, the intermediate part upper holding piece 73a and intermediate part lower holding piece 73b are capable of opening and closing in the vertical direction by forming a pair.

As is shown in FIG. 4, a plurality of electrical wire receiving grooves 77b that extend in the forward-rearward direction are formed in the upper surface of the intermediate part lower holding piece 73b from the central portion to one end portion thereof. Here, the electrical wire receiving grooves 77b are formed at the same pitch as the electrical wires W that are clamped in the electrical wire clamping device 60.

As is shown in FIGS. 2 and 4, a plurality of electrical wire retaining parts 78 that face the respective electrical wire receiving grooves 77b in the intermediate part lower holding piece 73b are formed on the undersurface of the intermediate part upper holding piece 73a from the central portion to one end portion thereof Furthermore, circular arc-form recessed parts 77a that are cut out in a circular arc shape as seen from the forward-rearward direction are formed in the lower end portions of the respective electrical wire retaining parts 78.

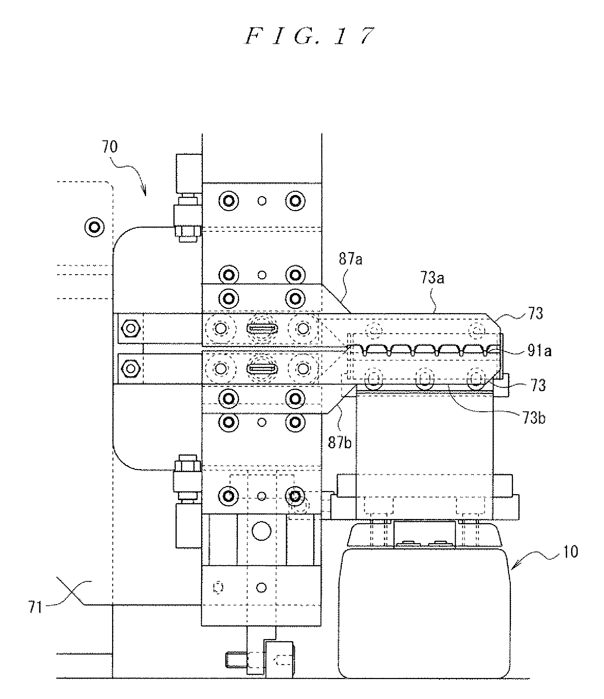

Moreover, when the intermediate part upper holding piece 73a and intermediate part lower holding piece 73b are closed, the lower end portions of the respective electrical wire retaining parts 78 of the intermediate part upper holding piece 73a are inserted into the respective electrical wire receiving grooves 77b of the intermediate part lower holding piece 73b, and the respective recessed parts 77a of the electrical wire retaining parts 78 to be above the electrical wires W are received in the respective electrical wire receiving grooves 77b of the intermediate part lower holding piece 73b. Then, when the undersurface of the intermediate part upper holding piece 73a and the upper surface of the intermediate part lower holding piece 73b contact each other as a result of the intermediate part upper holding piece 73a and intermediate part lower holding piece 73b being closed, a plurality of holding holes 91a (see FIG. 17) that can hold the electrical wires W in a slidable manner are demarcated by the respective recessed parts 77a in the intermediate part upper holding piece 73a and the respective electrical wire receiving grooves 77b in the intermediate part lower holding piece 73b. The respective holding holes 91a are designed such that the central axes of the held electrical wires W can be respectively positioned substantially coaxially with the central axes of the cylindrical bodies 17 of the sealing member transfer device 10 that is located in the sealing member fitting position. Furthermore, the electrical wire intermediate part holding unit 73 is placed in a closed state as a result of the undersurface of the intermediate part upper holding piece 73a and the upper surface of the intermediate part lower holding piece 73b contacting each other when the intermediate part upper holding piece 73a and intermediate part lower holding piece 73b are closed.

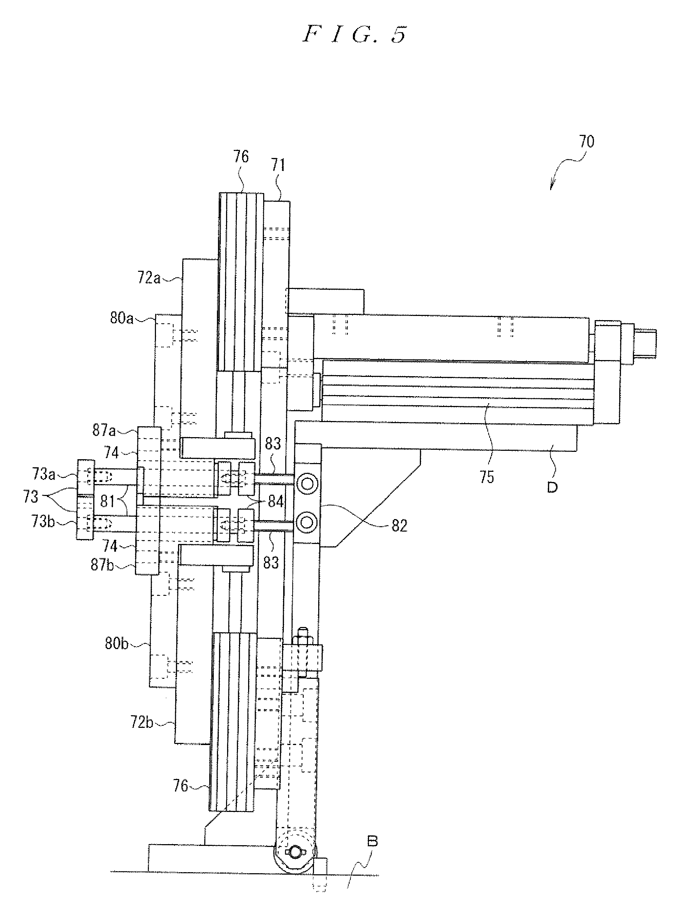

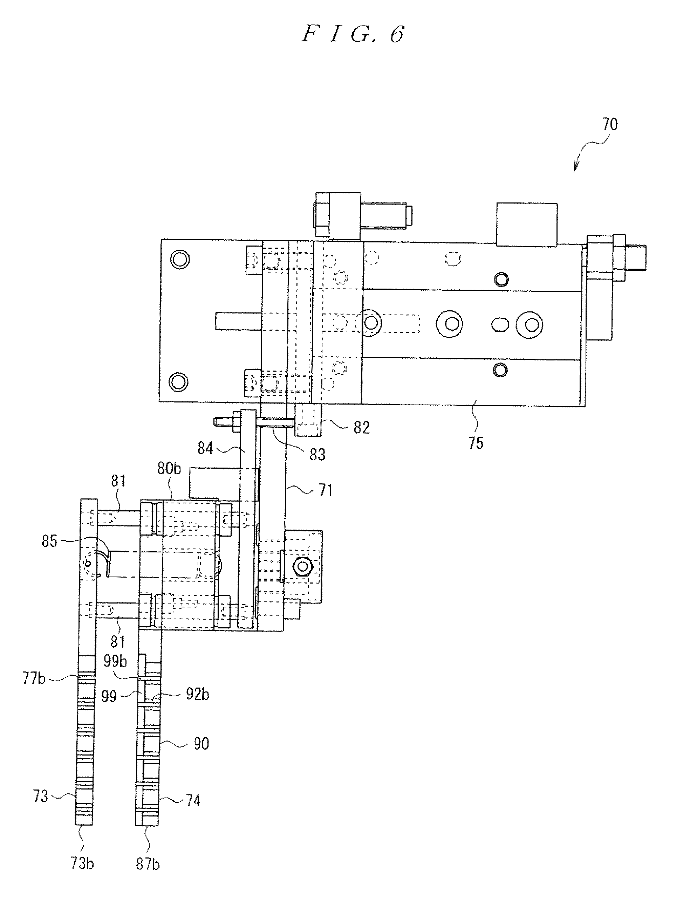

As is shown in FIGS. 3 and 4, one end portion of each of two advancing and retracting rods 81 that extend in the forward-rearward direction is fastened to each of the rear surfaces of the intermediate part upper holding piece 73a and intermediate part lower holding piece 73b. Then, the respective advancing and retracting rods 81 of the intermediate part lower holding piece 73b are passed through the respective advancing and retracting rod insertion holes 79 in the lower-side electrical wire holding unit attachment plate 80b in a slidable manner. As a result, the intermediate part lower holding piece 73b is attached to the lower-side ascending and descending base part 72b. Furthermore, as is shown in FIG. 4, the intermediate part lower holding piece 73b and electrical wire holding unit attachment plate 80b are linked by a tension spring 85 held in tension. Moreover, a pushing plate 84 is attached to the other end portions of the two advancing and retracting rods 81 that are passed through the advancing and retracting rod insertion holes 79. In addition, a pushing pin 83 that extends in the forward-rearward direction is disposed at one end portion of this pushing plate 84. Then, the intermediate part lower holding piece 73b is moved forward with respect to the ascending and descending base part 72b as a result of the pushing pin 83 of the pushing plate 84 being pushed in toward the front as shown in FIGS. 5 and 6. Then, when this pushing of the pushing pin 83 is released, the intermediate part lower holding piece 73b is moved toward the ascending and descending base part 72b by tension of the tension spring 85.

Furthermore, the respective advancing and retracting rods 81 of the intermediate part upper holding piece 73a are passed through the respective advancing and retracting rod insertion holes 79 in the upper-side electrical wire holding unit attachment plate 80a in a slidable manner. As a result, the intermediate part upper holding piece 73a is attached to the upper-side ascending and descending base part 72a. Moreover, as in the case with the intermediate part lower holding piece 73b, the intermediate part upper holding piece 73a and electrical wire holding unit attachment plate 80a are linked by a tension spring (not shown in the figures) that is held in tension. In addition, a pushing plate 84 is attached to the other end portions of the two advancing and retracting rods 81 that are passed through the advancing and retracting rod insertion holes 79. Furthermore, a pushing pin 83 that extends in the forward-rearward direction is disposed at one end portion of this pushing plate 84. Then, the intermediate part upper holding piece 73a is moved forward with respect to the ascending and descending base part 72a as a result of the pushing pin 83 of the pushing plate 84 being pushed in toward the front. Moreover, when this pushing of the pushing pin 83 is released, the intermediate part upper holding piece 73a is moved toward the ascending and descending base part 72a by tension of the tension spring 85.

Here, when the advancing and retracting base part 71 is retracted in a state in which the intermediate part upper holding piece 73a and intermediate part lower holding piece 73b are closed, the electrical wire intermediate part holding unit 73 retracts so that the push-in piece 82 on the base stand D is disposed in a position where the end surfaces of the two pushing pins 83 contact this push-in piece 82. Then, when the advancing and retracting base part 71 is retracted further in this state, the push-in piece 82 pushes the two pushing pins 83 forward, and this causes the two ascending and descending base parts 72a and 72b installed on the advancing and retracting base part 71 to be retracted in a state in which the retraction of the electrical wire intermediate part holding unit 73 is stopped. As a result, the two holding pieces 73a and 73b are moved forward with respect to the two ascending and descending base parts 72a and 72b. Furthermore, when the advancing and retracting base part 71 is caused to advance, the pushing of the two pushing pins 83 by means of the push-in piece 82 is released, so that the two holding pieces 73a and 73b that have been moved forward with respect to the two ascending and descending base parts 72a and 72b are moved toward the two ascending and descending base parts 72a and 72b by the tension of the tension springs 85. Consequently, the intermediate part upper holding piece 73a and intermediate part lower holding piece 73b are moved simultaneously in the forward-rearward direction, with the respective recessed parts 77a of the intermediate part upper holding piece 73a and the respective electrical wire receiving grooves 77b of the intermediate part lower holding piece 73b being caused to face each other.

As is shown in FIGS. 2 and 3, the electrical wire covering end part holding unit 74 has a covering end part upper holding piece 87a and a covering end part lower holding piece 87b. Furthermore, the covering end part upper holding piece 87a and covering end part lower holding piece 87b are capable of opening and closing in the vertical direction by forming a pair.

As is shown in FIG. 2, the covering end part lower holding piece 87b comprises a fastening part 88 that extends in the left-right direction and a holding part 90 that is connected to the fastening part 88 via a linking part 89 that extends upward at an inclination.

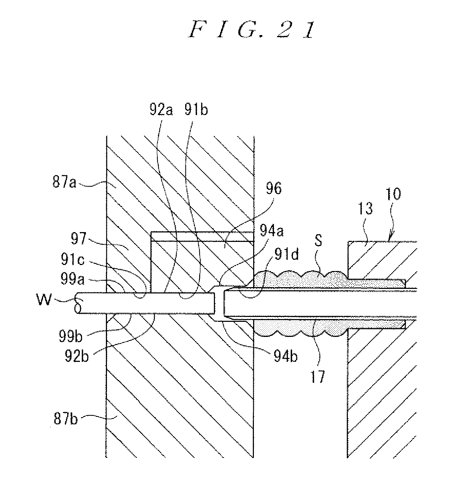

As is shown in FIG. 4, a plurality of electrical wire receiving grooves 92b that extends in the forward-rearward direction are formed in the upper surface of the holding part 90 of the covering end part lower holding piece 87b. Here, the shape of each electrical wire receiving groove 92b is the same as the shape of each electrical wire receiving groove 77b of the intermediate part lower holding piece 73b. Furthermore, a plurality of cylindrical body receiving grooves 94b (see FIG. 21) that extend in the forward-rearward direction are formed in the upper surface of the holding part 90 of the covering end part lower holding piece 87b to the rear side of the respective electrical wire receiving grooves 92b. Moreover, a planar cutout surface 99 is formed on the upper surface of the holding part 90 of the covering end part lower holding piece 87b to the front side of the electrical wire receiving grooves 92b as shown in FIG. 4. In addition, a plurality of electrical wire receiving grooves 99b, that are integral with respective electrical wire receiving grooves 92b, are formed in the upper surface of the cutout surface 99.

As is shown in FIG. 2, the covering end part upper holding piece 87a comprises a fastening part 88 that extends in the left-right direction and a holding part 90 that is connected to the fastening part 88 via a linking part 89 that extends downward at an inclination. As is shown in FIG. 3, the holding part 90 of the covering end part upper holding piece 87a comprises a first holding part 96 that is formed on the rear side and a second holding part 97 that is formed on the front side.

A plurality of electrical wire retaining parts (not shown in the figures) that face the electrical wire receiving grooves 92b of the covering end part lower holding piece 87b are formed on the undersurface of the first holding part 96. The electrical wire retaining parts of the first holding part 96 have the same shape as the electrical wire retaining parts 78 of the intermediate part upper holding piece 73a. Furthermore, circular arc-form recessed parts 92a (see FIG. 21) that are cut out in a circular arc shape as seen from the forward-rearward direction are formed in the lower end portions of the respective electrical wire retaining parts of the first holding part 96. The shape of the recessed parts 92a is the same as the shape of the recessed parts 77a of the electrical wire retaining parts 78 of the intermediate part upper holding piece 73a.

Moreover, when the covering end part upper holding piece 87a and covering end part lower holding piece 87b are closed, the lower end portions of the respective electrical wire retaining parts of the first holding part 96 are inserted into the respective electrical wire receiving grooves 92b of the covering end part lower holding piece 87b, and the respective recessed parts 92a of the electrical wire retaining parts to be above the electrical wires W are received in the respective electrical wire receiving grooves 92b of the covering end part lower holding piece 87b. Then, when the undersurface of the holding part 90 of the covering end part upper holding piece 87a and the upper surface of the holding part 90 of the covering end part lower holding piece 87b contact each other as a result of the covering end part upper holding piece 87a and covering end part lower holding piece 87b being closed, a plurality of holding holes 91b (see FIG. 21) that can hold the electrical wires W in a slidable manner are demarcated by the respective recessed parts 92a in the first holding part 96 and the respective electrical wire receiving grooves 92b in the covering end part lower holding piece 87b. The respective holding holes 91b are designed such that the central axes of the held electrical wires W can be respectively positioned substantially coaxially with the central axes of the cylindrical bodies 17 of the sealing member transfer device 10 that is located in the sealing member fitting position. Furthermore, the electrical wire covering end part holding unit 74 is placed in a closed state as a result of the undersurface of the holding part 90 of the covering end part upper holding piece 87a and the upper surface of the holding part 90 of the covering end part lower holding piece 87b contacting each other when the covering end part upper holding piece 87a and covering end part lower holding piece 87b are closed.

In addition, a plurality of cylindrical body receiving grooves 94a (see FIG. 21) that face the cylindrical body receiving grooves 94b of the covering end part lower holding piece 87b are formed in the undersurface of the first holding part 96 to the rear side of the recessed parts 92a of the respective electrical wire retaining parts. Furthermore, when the undersurface of the holding part 90 of the covering end part upper holding piece 87a and the upper surface of the holding part 90 of the covering end part lower holding piece 87b contact each other as a result of the covering end part upper holding piece 87a and covering end part lower holding piece 87b being closed, a plurality of cylindrical body receiving holes 91d (see FIG. 21) which allow the insertion of the tip end portions of the cylindrical bodies 17 of the sealing member transfer device 10 are demarcated by the respective cylindrical body receiving grooves 94a in the first holding part 96 and the respective cylindrical body receiving grooves 94b in the covering end part lower holding piece 87b. The respective cylindrical body receiving holes 91d are formed such that the central axes of these cylindrical body receiving holes 91d are substantially coaxial with the central axes of the cylindrical bodies 17 of the sealing member transfer device 10 that is located in the sealing member fitting position.

With regard to the second holding part 97, the undersurface thereof is formed substantially in a planar shape. The undersurface of the second holding part 97 is formed so as to face the cutout surface 99 of the covering end part lower holding piece 87b. A plurality of circular arc-form recessed parts 99a (see FIG. 21) that are cut out in a circular arc shape as seen from the forward-rearward direction are formed in the undersurface of the second holding part 97. The shape of the recessed parts 99a is the same as the shape of the recessed parts 77a of the electrical wire retaining parts 78 of the intermediate part upper holding piece 73a. Furthermore, when the undersurface of the second holding part 97 of the covering end part upper holding piece 87a and the cutout surface 99 of the covering end part lower holding piece 87b contact each other as a result of the covering end part upper holding piece 87a and covering end part lower holding piece 87b being closed, a plurality of holding holes 91c (see FIG. 21) that can hold the electrical wires W in a slidable manner are demarcated by the respective recessed parts 99a in the second holding part 97 and the respective electrical wire receiving grooves 99b in the cutout surface 99. The respective holding holes 91c are designed such that the central axes of the held electrical wires W can be respectively positioned substantially coaxially with the central axes of the cylindrical bodies 17 of the sealing member transfer device 10 that is located in the sealing member fitting position.

As is shown in FIG. 2, the fastening part 88 of the covering end part lower holding piece 87b is fastened to the electrical wire holding unit attachment plate 80b below the two advancing and retracting rod insertion holes 79. As a result, the covering end part lower holding piece 87b is attached to the lower-side ascending and descending base part 72b. In the electrical wire insertion guide device 70 that is in the initial state, because the intermediate part lower holding piece 73b is driven in the direction of the electrical wire holding unit attachment plate 80b by the tension spring 85, the covering end part lower holding piece 87b and intermediate part lower holding piece 73b are placed in a contacted state. In this case, the respective electrical wire receiving grooves 77b in the intermediate part lower holding piece 73b and the respective electrical wire receiving grooves 92b and 99b in the covering end part lower holding piece 87b form a series of connected grooves.

The fastening part 88 of the covering end part upper holding piece 87a is fastened to the electrical wire holding unit attachment plate 80a above the two advancing and retracting rod insertion holes 79. As a result, the covering end part upper holding piece 87a is attached to the upper-side ascending and descending base part 72a. In the electrical wire insertion guide device 70 that is in the initial state, because the intermediate part upper holding piece 73a is driven in the direction of the electrical wire holding unit attachment plate 80a by the tension spring, the covering end part upper holding piece 87a and intermediate part upper holding piece 73a are placed in a contacted state. In this case, the respective recessed parts 77a in the intermediate part upper holding piece 73a and the respective recessed parts 92a and 99a in the covering end part upper holding piece 87a form a series of connected recessed parts.

The covering end part upper holding piece 87a and intermediate part upper holding piece 73a are simultaneously raised or lowered as a result of the ascending and descending base part 72a being raised or lowered by the upper-side ascending and descending cylinder 76. Likewise, the covering end part lower holding piece 87b and intermediate part lower holding piece 73b are allowed to be simultaneously raised or lowered as a result of the ascending and descending base part 72b being raised or lowered by the lower-side ascending and descending cylinder 76. Furthermore, the electrical wire intermediate part holding unit 73 and electrical wire covering end part holding unit 74 are placed in an open state as a result of the covering end part upper holding piece 87a and intermediate part upper holding piece 73a being raised and the covering end part lower holding piece 87b and intermediate part lower holding piece 73b being lowered. Moreover, the electrical wire intermediate part holding unit 73 and electrical wire covering end part holding unit 74 are placed in a closed state as a result of the covering end part upper holding piece 87a and intermediate part upper holding piece 73a being lowered and the covering end part lower holding piece 87b and intermediate part lower holding piece 73b being raised.

In addition, the electrical wire intermediate part holding unit 73 and electrical wire covering end part holding unit 74 are simultaneously advanced or retracted as a result of the advancing and retracting base part 71 being advanced or retracted by the advancing and retracting cylinder 75.

Furthermore, the electrical wire intermediate part holding unit 73 is moved toward the front with respect to the electrical wire covering end part holding unit 74 that is fastened to the ascending and descending base parts 72a and 72b as a result of the pushing pins 83 of the pushing plates 84 being pushed forward by the push-in piece 82.

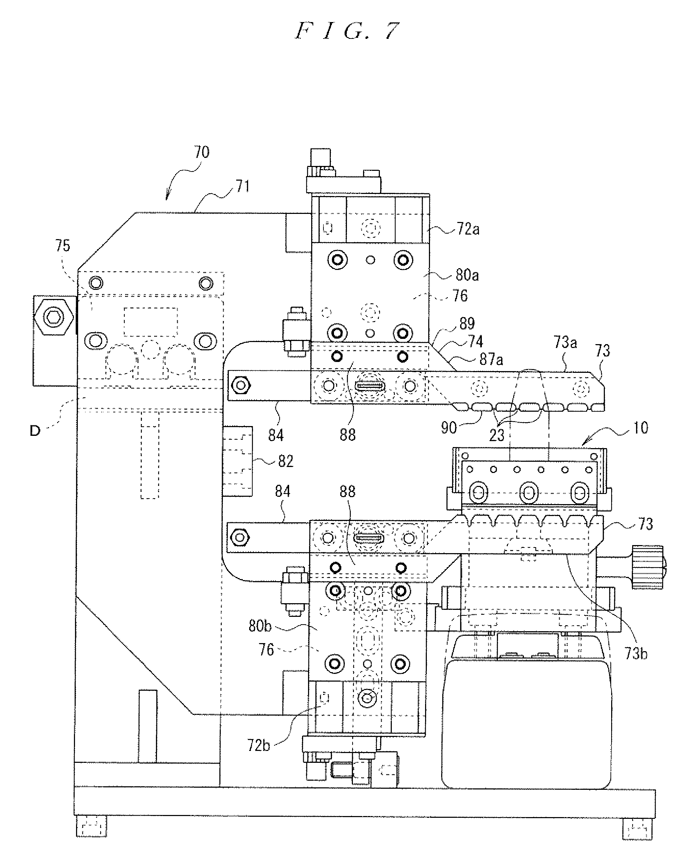

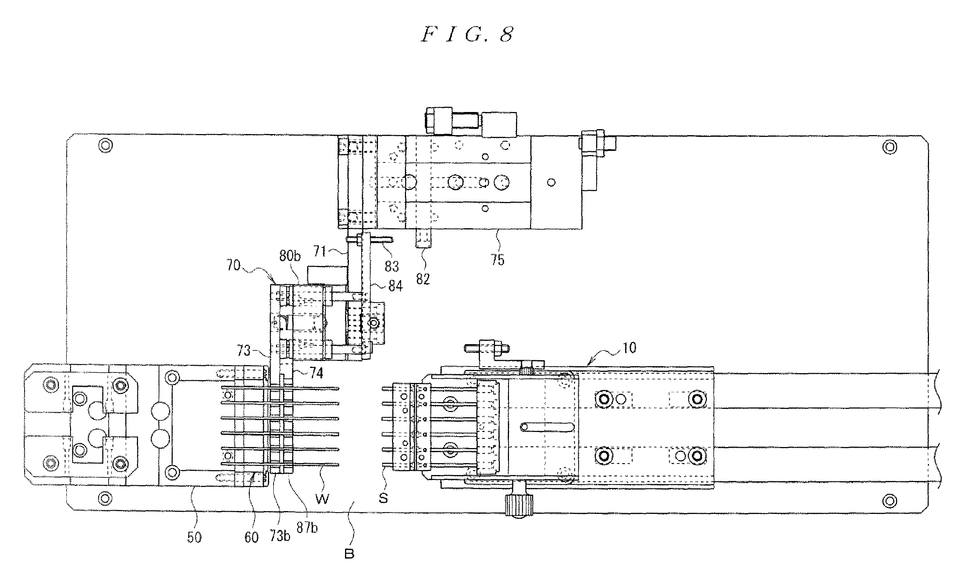

Moreover, in the electrical wire insertion guide device 70 that is in the initial state, the electrical wire intermediate part holding unit 73 and electrical wire covering end part holding unit 74 are in an open state as shown in FIG. 7. Furthermore, when the electrical wire insertion guide device 70 is in the initial state, the advancing and retracting base part 71 is located in the advanced position, and the electrical wire intermediate part holding unit 73 and electrical wire covering end part holding unit 74 are disposed as an integral unit in the electrical wire holding position to the rear side of the electrical wire clamping device 60 as shown in FIG. 8. In this case, the covering end part lower holding piece 87b and intermediate part lower holding piece 73b are disposed underneath the electrical wires W that are led out from the electrical wire clamping device 60, and the respective electrical wire receiving grooves 77b in the intermediate part lower holding piece 73b are disposed underneath the lead-out parts of the respective electrical wires from the electrical wire clamping part 62. Likewise, the covering end part upper holding piece 87a and intermediate part upper holding piece 73a are disposed above the electrical wires W that are led out from the electrical wire clamping device 60, and the respective recessed parts 77a in the intermediate part upper holding piece 73a are disposed above the lead-out parts of the respective electrical wires from the clamping part 62. Furthermore, as a result of the advancing and retracting base part 71 being in the advanced position, the covering end part lower holding piece 87b and intermediate part lower holding piece 73b contact each other, and are placed in an integrated state, and the covering end part upper holding piece 87a and intermediate part upper holding piece 73a contact each other, and are placed in an integrated state.

Next, a method for fitting sealing member S on the covering end parts of electrical wires W will be described in detail with reference to the figures.

First, as is shown in FIGS. 9A and 9B, in the initial state in which one of the sealing member transfer devices 10 is located in the sealing member receiving position which faces the sealing member holding device 30, a plurality of sealing members S that are sent from a sealing member supply source (not shown in the figures) are respectively held inside the through-holes 31a in the sealing member holding part 31. Furthermore, in this initial state, the first member 13 and cylindrical bodies 17 are located in the retracted positions, and the guide members 20 are located in the advanced position. Moreover, the seal pressing member 32 is in the retracted position.

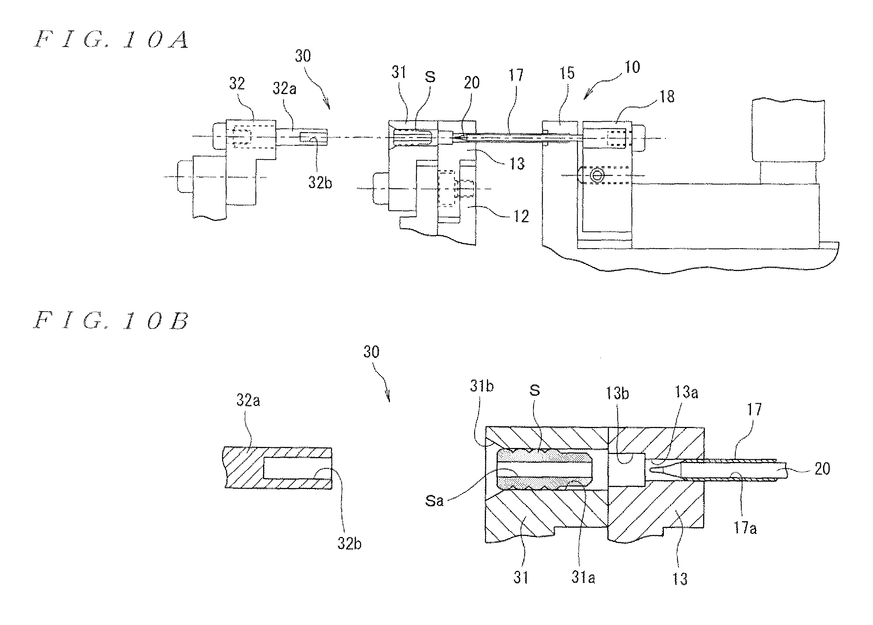

Then, the first member 13 advances as shown in FIGS. 10A and 10B. As a result, the front end surface of the first member 13 contacts the front end surface of the sealing member holding part 31.

Next, the seal pressing member 32 advances as shown in FIGS. 11A and 11B. As a result, the front end surfaces of the respective pressing parts 32a press the rear end surfaces of the respective sealing members S, so that the front portions of the sealing members S enter the sealing member receiving recessed parts 13b of the first member 13.

Afterward, the respective guide members 20 and respective cylindrical bodies 17 advance as shown in FIGS. 12A and 12B. As a result, the respective guide members 20 and respective cylindrical bodies 17 enter the hollow parts Sa of the respective sealing members S that are held in the sealing member holding part 31, and receive and hold the sealing members S on the outer circumferential surfaces of the cylindrical bodies 17. At this point, because the front ends of the respective guide members 20 are formed as tapered circular conic-shaped guide parts, these guide parts press-open the hollow parts Sa of the respective sealing members S while the respective guide members 20 and respective cylindrical bodies 17 enter the hollow parts Sa of the respective sealing members S, making this entry to be performed smoothly. Furthermore, because the rear end surfaces of the respective sealing members S are pressed by the respective pressing parts 32a of the seal pressing member 32, there is no flying out of the sealing members S from the sealing member holding part 31.

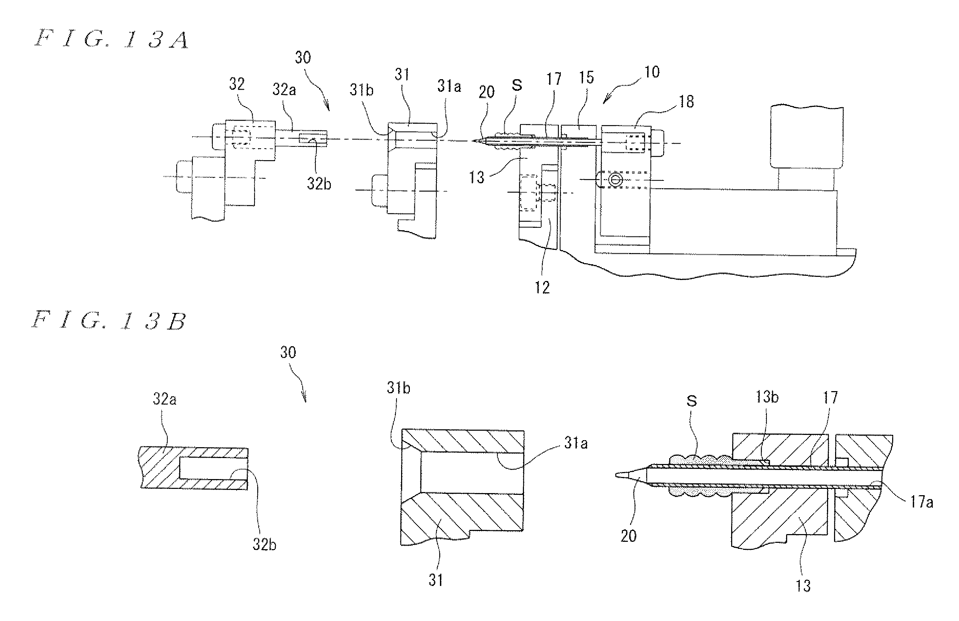

Then, the first member 13 retracts as shown in FIGS. 13A and 13B. Furthermore, the guide members 20 also retract as shown in FIGS. 14A and 14B while the position of this sealing member transfer device 10 is switched to the sealing member fitting position. In this case, the sealing members S are still held on the outer circumferential surfaces of the cylindrical bodies 17. When the position of each sealing member transfer device 10 is switched to the sealing member fitting position, the base plate part 11 pivots 180° clockwise or counterclockwise in the direction indicated by the arrow in FIG. 1.

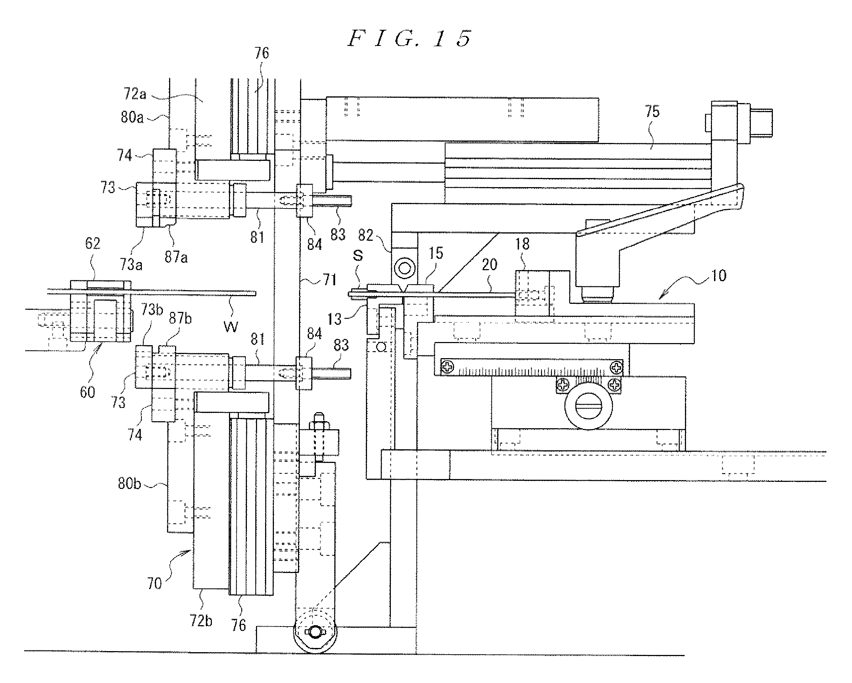

Meanwhile, in the initial state in which the sealing member transfer device 10 shown in FIGS. 14A and 14B is located in the sealing member fitting position, the electrical wire supporting member 40 is supported by the supporting part 51 of the electrical wire supporting member setting jig 50, and the respective electrical wires W are disposed in a state in which the vicinity of the covering end parts thereof are clamped by the electrical wire clamping device 60 as shown in FIG. 15. In this case, the respective electrical wires W are clamped by the electrical wire clamping device 60 in a state in which the tip end parts are caused to protrude rearward from the clamping part 62.

Furthermore, as is shown in FIGS. 8 and 15, the electrical wire insertion guide device 70 is disposed in the electrical wire holding position in the initial state. In the electrical wire insertion guide device 70 that is in the initial state, the respective electrical wire receiving grooves 77b in the intermediate part lower holding piece 73b are disposed underneath the lead-out parts of the respective electrical wires W from the clamping part 62, and the respective recessed parts 77a of the intermediate part upper holding piece 73a are disposed above the lead-out parts of the respective electrical wires W from the electrical wire clamping part 62.

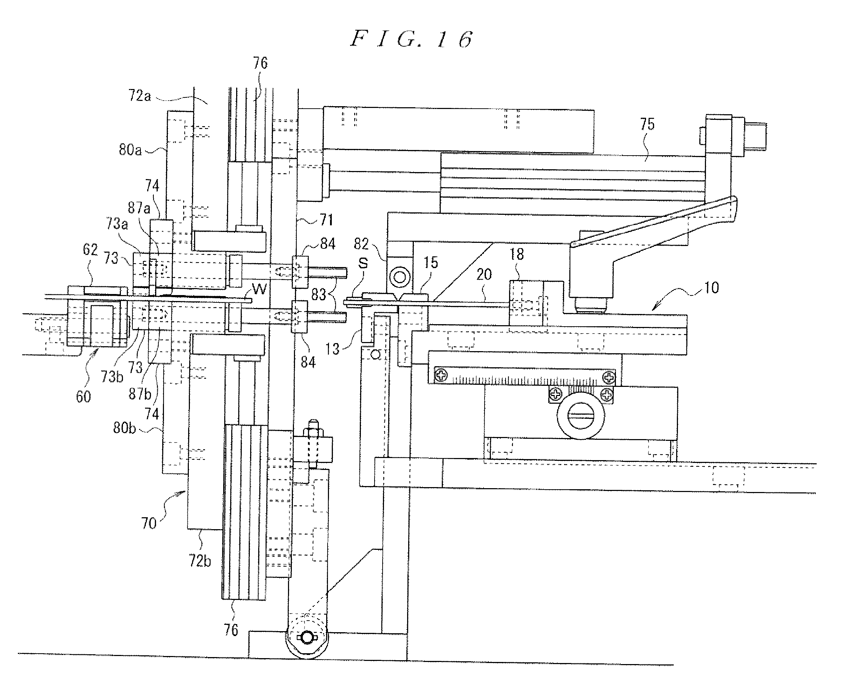

Next, as is shown in FIGS. 16 and 17, the covering end part upper holding piece 87a and intermediate part upper holding piece 73a descend, and the covering end part lower holding piece 87b and intermediate part lower holding piece 73b ascend. As a result, the electrical wire intermediate part holding unit 73 and electrical wire covering end part holding unit 74 are closed. In this case, the intermediate part upper holding piece 73a and intermediate part lower holding piece 73b are positioned immediately behind the rear end surface of the clamping part 62 of the electrical wire clamping device 60. Consequently, of the electrical wires W that are clamped in the electrical wire clamping device 60, the parts that are led out from the clamping part 62 are held by the electrical wire intermediate part holding unit 73 and electrical wire covering end part holding unit 74.

Here, the pitch of the covering end parts of the respective electrical wires W that are led out from the clamping part 62 of the electrical wire clamping device 60 is irregular because the electrical wires hang down toward the bottom or the like. This becomes particularly prominent in cases where the external diameter of the electrical wires W is small.

In contrast, the pitch of the lead-out parts (from the clamping part 62) of the respective electrical wires W that are held in the electrical wire clamping device 60 is the same as the specified pitch at which the clamping part 62 holds the respective electrical wires W.

Therefore, by holding the respective electrical wires W at the lead-out parts of the respective electrical wires W from the clamping device 60 with the pitch thereof being established, the respective electrical wires W can be automatically held in a reliable manner even in cases where the external diameter of the electrical wires W is small. In this case, the respective holding holes 91a in the electrical wire intermediate part holding unit 73 and the respective holding holes 91b and 91c in the electrical wire covering end part holding unit 74 are placed in a state in which these holes form a series of connected holes, thus holding the respective electrical wires W in a slidable manner. Then, the electrical wire intermediate part holding unit 73 and electrical wire covering end part holding unit 74 perform the positioning of the respective held electrical wires W such that the central axes of these electrical wires W are substantially coaxial with the central axes of the cylindrical bodies 17 of the sealing member transfer device 10 that is located in the sealing member fitting position.

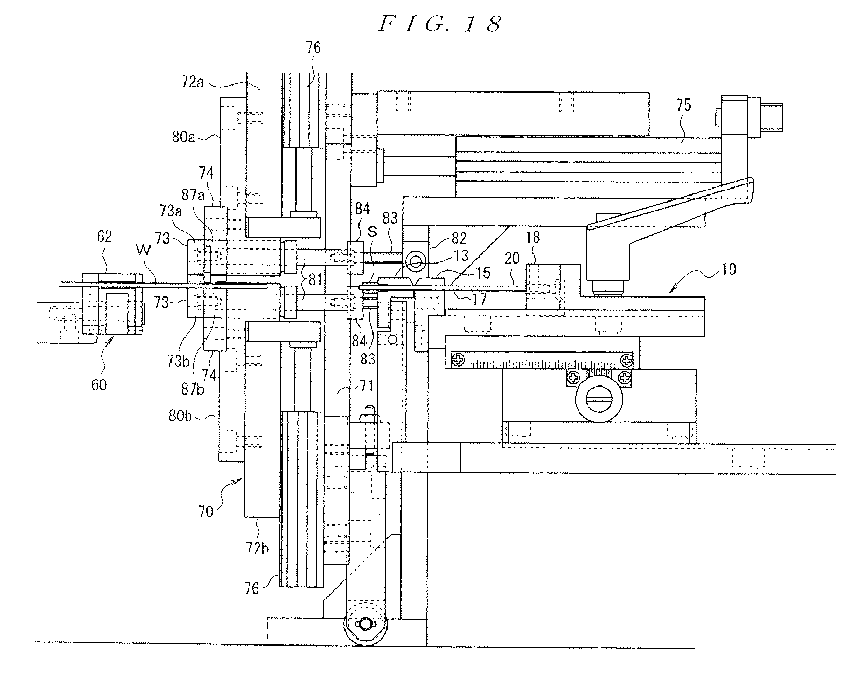

Then, the advancing and retracting base part 71 retracts as shown in FIG. 18. As a result, the end surfaces of the two pushing pins 83 of the electrical wire intermediate part holding unit 73 contact the push-in piece 82. In this case, because the electrical wire intermediate part holding unit 73 and electrical wire covering end part holding unit 74 hold the respective electrical wires W in a slidable manner, the positions where the respective electrical wires W are held by the electrical wire intermediate part holding unit 73 and electrical wire covering end part holding unit 74 move toward the covering end parts of the electrical wires W. Then, the electrical wire intermediate part holding unit 73 and electrical wire covering end part holding unit 74 are moved to the area between the electrical wire clamping device 60 and the sealing member fitting position, and therefore hold the portions of the respective electrical wires W between the lead-out parts from the clamping part 62 and the covering end parts. Furthermore, in the present embodiment, the electrical wire intermediate part holding unit 73 and electrical wire covering end part holding unit 74 are moved to substantially the central portion between the electrical wire clamping device 60 and the sealing member fitting position, and therefore hold substantially the central portions of the respective electrical wires W between the lead-out parts from the clamping part 62 and the covering end parts.

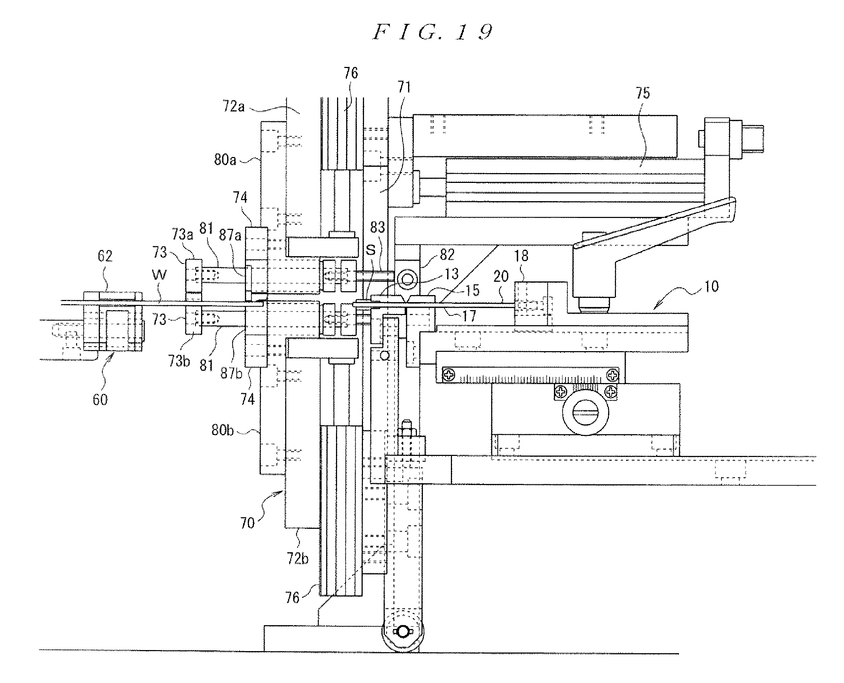

Then, the advancing and retracting base part 71 retracts further as shown in FIG. 19. This causes the two pushing pins 83 to be pushed forward by the push-in piece 82, so that only the electrical wire covering end part holding unit 74 retracts in a state in which the retraction of the electrical wire intermediate part holding unit 73 is stopped. In this case, the electrical wire covering end part holding unit 74 is moved to the sealing member fitting position, and holds the covering end parts of the respective electrical wires W. As a result, the electrical wire intermediate part holding unit 73 and electrical wire covering end part holding unit 74 hold the respective electrical wires W in a state in which each of these electrical wires is made into a substantially straight line, and perform the positioning of the respective held electrical wires W such that the central axes of these electrical wires W are substantially coaxial with the central axes of the cylindrical bodies 17 of the sealing member transfer device 10 that is located in the sealing member fitting position. Consequently, the electrical wire covering end part holding unit 74 can accurately perform the positioning of the covering end parts of the electrical wires W with respect to the cylindrical bodies 17 holding the sealing members S.

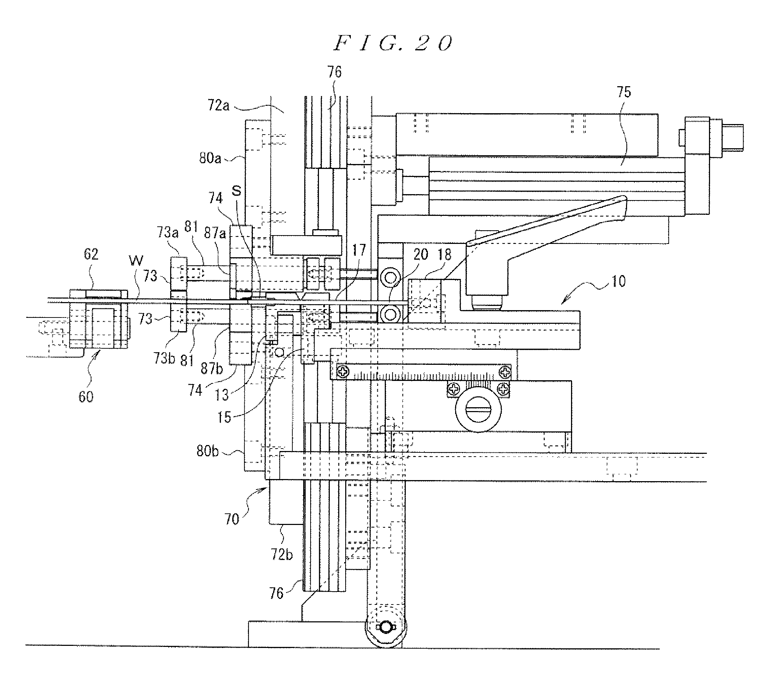

Next, as is shown FIGS. 20 and 21, the first member 13 advances again accompanied by the sealing members S and cylindrical bodies 17. As a result, the tip end portions of the respective cylindrical bodies 17 are inserted into the respective cylindrical body receiving holes 91d in the electrical wire covering end part holding unit 74.

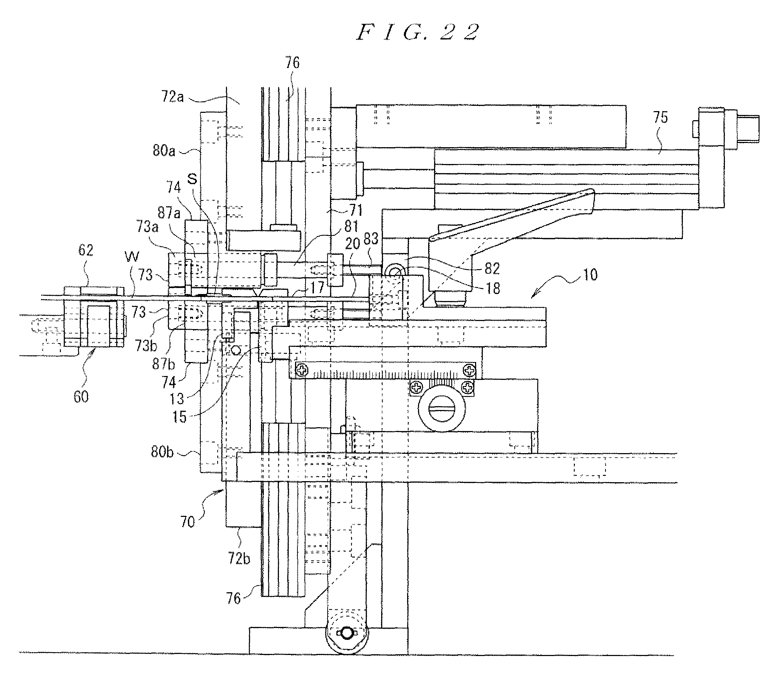

Moreover, the first member 13 advances further accompanied by the sealing members S and cylindrical bodies 17 as shown in FIG. 22. Consequently, the tip end portions of the cylindrical bodies 17 push the electrical wire covering end part holding unit 74 forward. In this case, the position where each of the electrical wires W is held by the electrical wire covering end part holding unit 74 is moved to the area between the part led out from the clamping part 62 and the covering end part, so that the covering end parts of the respective electrical wires W are received inside the cylindrical bodies 17.

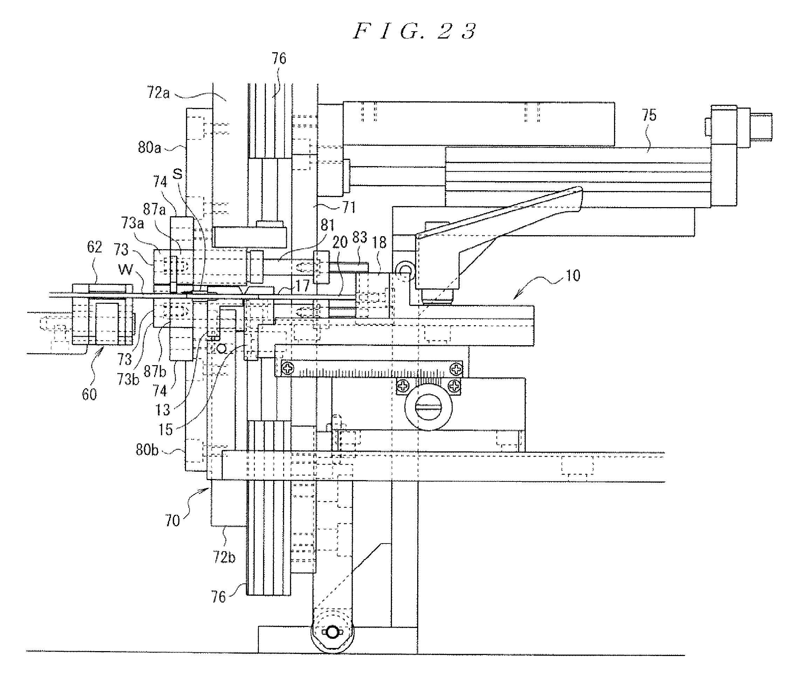

Furthermore, the first member 13 advances further accompanied by the sealing members S and cylindrical bodies 17 as shown in FIG. 23. As a result, the tip end portions of the cylindrical bodies 17 push the electrical wire covering end part holding unit 74 and electrical wire intermediate part holding unit 73 forward. Consequently, the positions where each of the electrical wires W is held by the electrical wire covering end part holding unit 74 and electrical wire intermediate part holding unit 73 are moved further toward the part led out from the clamping part 62. Then, as is shown in FIG. 24, the covering end parts of the respective electrical wires W are inserted into the cylindrical bodies 17 to a position that allows the fitting of the sealing members S that are held on the outer circumferential surfaces of the cylindrical bodies 17.

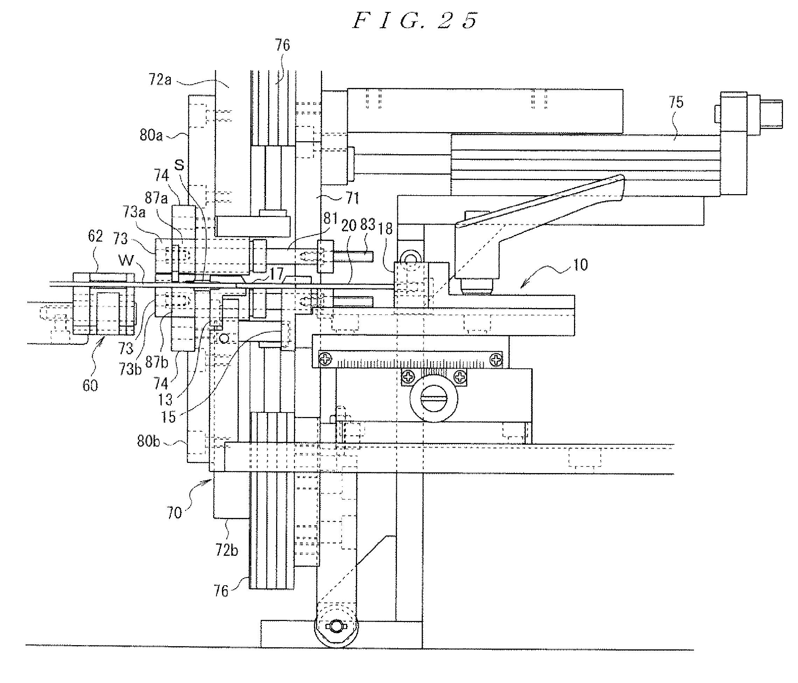

Subsequently, only the cylindrical bodies 17 retract into the first member 13 as shown in FIGS. 25 and 26. As a result, the respective sealing members S on the cylindrical bodies 17 are transferred onto the covering end parts of the respective electrical wires W. Consequently, the sealing members S are automatically fitted on the covering end parts of the electrical wires W.

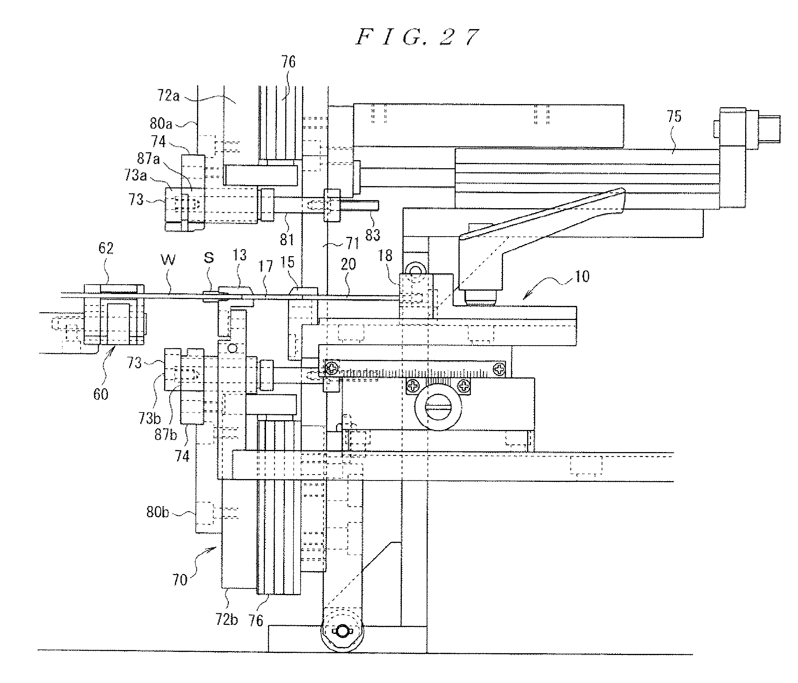

Then, the electrical wire intermediate part holding unit 73 and electrical wire covering end part holding unit 74 are opened as shown in FIG. 27. This releases the holding of the respective electrical wires W performed by the electrical wire intermediate part holding unit 73 and electrical wire covering end part holding unit 74.

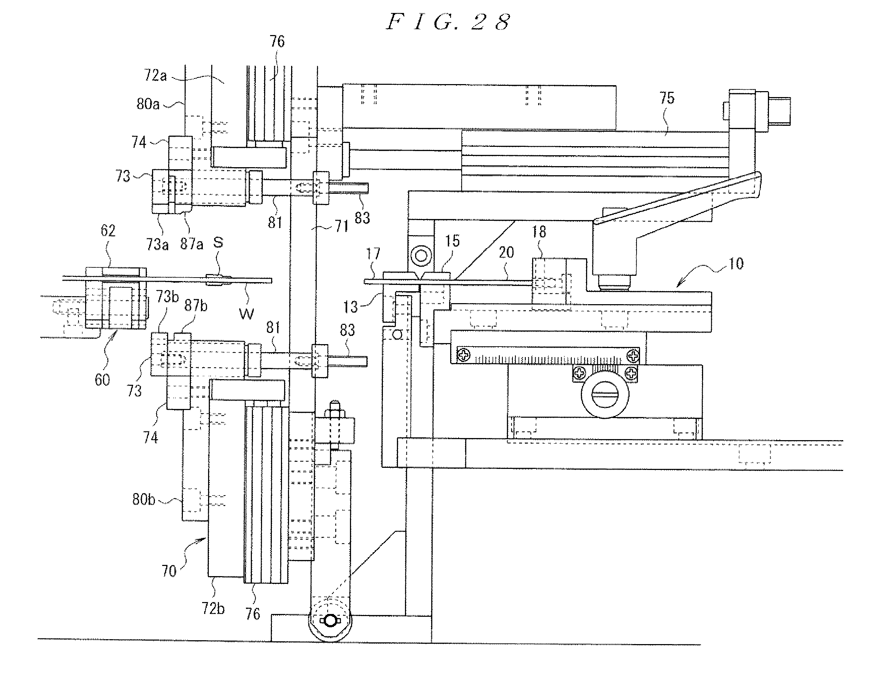

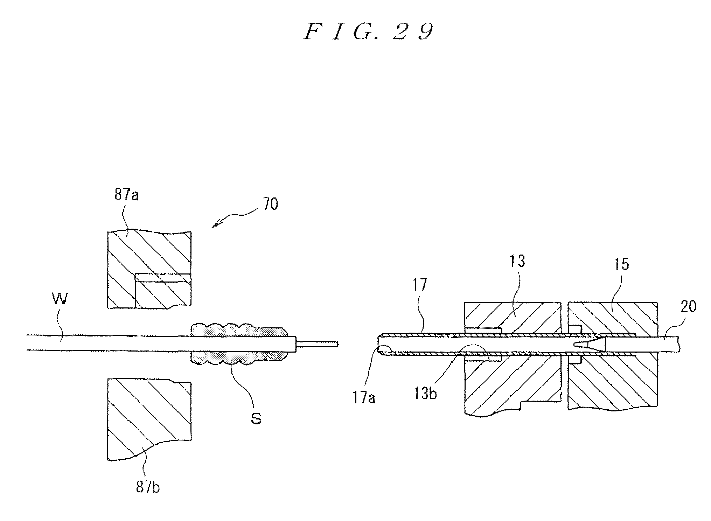

Finally, the first member 13 retracts as shown in FIGS. 28 and 29. As a result, the respective electrical wires W whose covering end parts have the sealing members S fitted thereon are removed from the interior of the cylindrical bodies 17.

Furthermore, contacts (not shown in the figures) are subsequently connected by crimping to the covering end parts of the respective electrical wires W that have been removed.

Then, this sealing member transfer device 10 is returned to the initial state shown in FIGS. 9A and 9B.

Thus, with respect to the sealing member fitting apparatus 1, by holding the lead-out parts of respective electrical wires W beyond the clamping device 60, the electrical wires W can be set automatically in the electrical wire insertion guide device 70.

Moreover, since the electrical wire intermediate part holding unit 73 holds the respective electrical wires W between the lead-out parts from the clamping part 62 and the covering end parts (substantially the central parts in the present embodiment) when the sealing members S are fitted on the electrical wires W, it is possible to prevent buckling of the electrical wires W. This is particularly effective when electrical wires W having a small external diameter are set in the electrical wire insertion guide device 70.

An embodiment of the present invention has been described above. However, the present invention is not limited to this embodiment, and various alterations or modifications can be made.

For example, it would also be possible to fit a sealing member S on the covering end part of a single electrical wire W, instead of fitting sealing members on the covering end parts of a plurality of electrical wires W.

Furthermore, it is sufficient if the sealing member transfer devices 10 are constructed so as to switch between the sealing member receiving position which faces the sealing member holding device 30 and the sealing member fitting position which faces the electrical wire clamping device 60. It is not absolutely necessary to install these devices on the base plate part 11 that is supported in a pivotable manner in the arrow direction in FIG. 1.

Moreover, it is not necessary to install the sealing member transfer devices 10 in a pair as a single sealing member transfer device 10 may be installed instead.

In addition, with regard to the electrical wire insertion guide device 70, it would also be possible to use a construction in which a plurality of electrical wire intermediate part holding units 73 are provided.

## Claims

1. A sealing member fitting apparatus (1) comprising:
a sealing member holding device (30) for holding a hollow sealing member (S);
an electrical wire clamping device (60) for clamping an electrical wire (W);
a sealing member transfer device (10) for switching between a sealing member receiving position that faces the sealing member holding device (30) and a sealing member fitting position that faces the electrical wire clamping device (60) so that said sealing member transfer device (10) in the sealing member receiving position is arranged to receive and hold the sealing member (S) that is held by the sealing member holding device (30), and said sealing member transfer device (10) in the sealing member fitting position is arranged to fit said sealing member (S) on a covering end part of the electrical wire (W) when the electrical wire (W) is clamped by the electrical wire clamping device (60); and
an electrical wire insertion guide device (70) for holding in a slidable manner said electrical wire (W) when the electrical wire (W) is clamped by the electrical wire clamping device (60), and which is arranged to position the central axis of the covering end part of said electrical wire (W) substantially coaxially with the central axis of the sealing member (S) when the sealing member (S) is held by the sealing member transfer device (10) located in the sealing member fitting position, wherein
the electrical wire insertion guide device (70) is arranged to hold a part of the electrical wire (W) which leads out from the electrical wire clamping device (60), and is arranged to move to its sealing member fitting position to hold the covering end part of the electrical wire (W).

2. The apparatus according to claim 1, wherein the electrical wire insertion guide device (70) has an electrical wire covering end part holding unit (74) for holding the covering end part of the electrical wire (W) when the electrical wire (W) is clamped by the electrical wire clamping device (60), and an electrical wire intermediate part holding unit (73) for holding the electrical wire (W) between its lead-out part and its covering end part when the electrical wire (W) is clamped by the electrical wire clamping device (60).

3. A method of fitting a sealing member (S) comprising the steps of:
holding a hollow sealing member (S) with a sealing member holding device (30);
clamping an electrical wire (W) with an electrical wire clamping device (60);
transferring the sealing member (S) from the sealing member holding device (30) to a sealing member transfer device (10) in a sealing member receiving position facing the sealing member holding device (30);
switching said sealing member transfer device (10) from the sealing member receiving position to a sealing member fitting position facing the electrical wire clamping device (60);
holding in a slidable manner in an electrical wire insertion guide device (70) a part of the electrical wire (W) which leads out from the electrical wire clamping device (60);
moving the electrical wire insertion guide device (70) to its sealing member fitting position to hold a covering end part of the electrical wire (W) and to position the central axis of the covering end part so as to be substantially coaxial with the central axis of the sealing member (S); and
fitting the sealing member (S) on the covering end part of the electrical wire (W).

4. The method according to claim 3, including the steps of
providing the electrical wire insertion guide device (70) with an electrical wire covering end part holding unit (74) which holds the covering end part of the electrical wire (W) when the electrical wire (W) is clamped by the electrical wire clamping device (60), and an electrical wire intermediate part holding unit (73) which holds the electrical wire (W) between its lead-out part and its covering end part when the electrical wire (W) is clamped by the electrical wire clamping device (60);
forming an integral unit from the electrical wire covering end part holding unit (74) and the electrical wire intermediate part holding unit (73) and holding the lead-out part of the electrical wire (W);
moving the electrical wire covering end part holding unit (74) to its sealing member fitting position to hold the covering end part of the electrical wire (W); and
moving the electrical wire intermediate part holding unit (73) to the area between the electrical wire clamping device (60) and the sealing member fitting position to hold the electrical wire (W) between the lead-out part and the covering end part.
